# EUROPEAN PATENT APPLICATION

(11) **EP 3 351 690 A1**
(43) Date of publication of application: **25.07.2018**
(21) Application number: 17152873.0
(22) Date of filing: 24.01.2017
(51) Int. Cl.: E02F 3/96, E02F 5/10, F16L 1/06, F16L 1/09

(54) **PIPE PUSHER**

(71) Applicant: Stanton Bonna Concrete Ltd, Ilkeston, Derbyshire DE7 4QW (GB)
(72) Inventor: Taylor,, Christopher, Ilkeston,, Derbyshire DE7 4QW (GB)
(74) Representative: Adamson Jones

(57) **Abstract**

The present invention relates to the laying of drainage pipes, in particular concrete drainage pipes comprising a string of connected pipe sections. A pipe pushing tool (26,126) is provided to assist with jointing adjacent sections of pipe (2,12). The tool (26,126) is attachable to a quick hitch coupling, for example as on the arm of an excavator, and has a pair of adjustable beams (36,38,136,138) releasably secured to a main beam (34,134). Each adjustable beam (36,38,136,138) can be secured to the main beam in more than one position to thereby adjust the width of the tool (26,126).

## Description

The present invention relates to the field of civil engineering or construction, and in particular to the laying of concrete drainage pipes.

Concrete drainage pipes are commonly used in the construction industry. For ease of transportation, concrete pipes are pre-formed in sections of around 2.5m in length which have to be assembled, or 'jointed', on site. Typically, each pipe section has a spigot at one end and a socket at the other so that, when laid end to end, the spigot of one pipe section can engage with the socket of another.

In order to ensure a watertight seal between the adjacent pipe sections, gaskets are provided between the pipe sections, often integrated into the socket. During assembly of a length of pipe, a significant amount of force must be applied to each pipe section in order to force the spigot into an adjacent socket and compress the gasket to achieve the seal.

The size and weight of the pipe sections leads to problems with offloading and handling of the sections, and also to safety concerns for workers on the construction site. Additional safety concerns also arise when pipe sections are being forced together, especially for any workers near the joint being formed or the application of the force.

Specialist tools are known to assist with the lifting and general handling of pipe sections to address the problems that exist with offloading and positioning of pipe sections on site. However, none of these tools appropriately addresses the problem of pushing pipe sections together once laid in position.

Pipes are typically laid below ground level in pre-dug trenches, minimising access to the end of the pipe sections for pushing. In addition, many of the lifting and handling solutions either lack the capacity to apply a force to one end of a pipe section, or would cause damage to the end of the pipe section and/or gasket in doing so. As a result, workers commonly joint pipes using the scoop/bucket of an excavator to apply a force to a length of timber positioned to protect the end of a pipe section.

The most significant problem with this approach is that it requires the length of timber to be held in place against the end of a pipe section while the bucket of the excavator is positioned and while the initial force is applied. This requires the presence of one or more workers in the region of the applied force, leading to a risk of pinch and trap injuries as the force is applied, and potentially more serious or fatal injuries in the event of the length of timber slipping or breaking under the applied load

There is a need, therefore, for a tool or device to assist with the jointing of concrete pipe sections to simplify and improve the safety of the operation of laying a concrete drainage pipe.

According to a first aspect of the invention there is provided a pipe pusher as defined in the appended claim 1. Further advantageous features of the pipe pusher are recited in the associated dependent claims.

The pipe pushing tool comprises a main body having a head with a quick hitch coupling for securing the tool to the arm of an excavator or similar machine and an elongate main beam secured at right angles to the head across the width of the tool. A pair of adjustable beams provided along a first side of the main beam to define a front face of the tool, and releasable securing means are provided for securing each adjustable beam to the main beam. As a result, each adjustable beam is movable along the length of the main beam and can be secured to the main beam in more than one position to thereby adjust the width of the tool.

The adjustable nature of the pipe pusher is significant. Pipe sections are provided in a number of different diameters, and the trenches in which they are installed therefore also differ in width. According to manufacturers' advice, the best place to contact a pipe section for pushing home is the springing level (the central axis halfway down the joint). At this level, the width of the pipe section and of the trench both place limitations on the size of a tool, meaning that a large pushing tool, that would otherwise be suitable for pushing all diameters of pipe section, could not be used with smaller diameter pipe sections because it would not fit into the narrower trench width. A smaller tool solves this problem, but would likely be too narrow to bear on the walls of larger diameter pipe sections.

Providing a pair of adjustable beams allows the tool to remain balanced, with the pushing force centralised on the tool, as the width of the tool is varied.

The securing means may permit each adjustable beam to be secured to the main beam in a plurality of predefined positions, for example at set width intervals.

The securing means may comprise a plurality of holes in the main beam and/or in each of the adjustable beams.

The main beam may comprise a horizontal slot and each of the adjustable beams may comprise a first plate which is, in use, received in the horizontal slot. The interaction of the first plate and the horizontal slot allows horizontal movement of the adjustable beams while restricting vertical movement or twisting of the adjustable beams relative to the main beam.

The securing means may comprise a locating pin removably inserted through one of the plurality of holes in the main beam and one of the plurality of holes in each of the adjustable beams.

The plurality of holes in the main beam may extend across the horizontal slot and the plurality of holes in the adjustable beams may be provided in the plates. The locating pin may fix the position of the first plate within the horizontal slot to set the position of each adjustable beam relative to the main beam.

Two holes may be provided in each end of the main beam. The spacing between these two holes may differ from the spacing between adjacent holes in the plurality of holes in the adjustable beams to increase the number of adjustment positions. A third hole may also be provided in each end of the main beam. The third hole may be spaced from the other two holes by a further different distance to increase the spacing options still further. For example, the plurality of holes in the adjustable beams may be spaced apart by 100mm, the first two holes in each end of the main beam may be spaced apart by 50mm and the third hole in each end of the main beam may be 25 mm from the adjacent one of the first two holes.

The securing means may further comprise a second plate provided on each adjustable beam which extends, in use, through the horizontal slot so that an end portion of the second plate extends beyond a second side of the main beam opposite the first side, and an abutment feature extending from the end portion of the second plate perpendicular to the horizontal slot.

The abutment feature may comprise a further plate secured at right angles to the second plate, or may comprise a pin removably received in a hole provided in the end portion of the second plate. The abutment feature prevents the first plate from moving out of the horizontal slot. Making the abutment feature removable assists with assembly and/or modification of the tool or replacement of either adjustable beam.

The main beam may comprise two members which are secured together in a spaced relationship to provide the horizontal slot, for example two U shaped steel channels positioned back to back. Positioning U shaped channels back to back minimises the space a locating pin must pass through to extend across the horizontal slot from one side of the main beam to the other.

The two members may be secured together by steel end plates provided at either end of the two members. The end plates may be shaped and/or sized and/or positioned not to obstruct the horizontal slot at the first side of the main beam so that the first plates can extend past the end plates while within the horizontal slot. In other words, the end plates may block a rear part of the horizontal slot while a front part of the slot, corresponding to the width of the first plates, may be open at both ends so that the first plates can slide outwardly past the ends of the main beam. The adjustable beams can thus extend the width of the tool, but the second plates will still engage with the end plates to retain the adjustable beams in engagement with the main beam.

Alternatively, the securing means comprises a set of bolts which are, in use, received in selected holes in the main beam and in the adjustable beams.

The plurality of holes in the main beam may be provided in the first side of the main beam and the plurality of holes in the adjustable beams may be provided in an abutting side of the adjustable beams. The adjustable beams may thereby be bolted to the front of the main beam in various positions to provide various widths to the tool.

Two rows of holes may be provided in the main beam and in the adjustable beams for security and to help resist torque between the beams.

The plurality of holes in the main beam and the plurality of holes in the adjustable beams may be provided in spaced apart groups, and the spacing between adjacent holes in each group may be consistent for all groups. For example, the spacing between adjacent holes in all groups may be 90mm, but the spacing between groups may vary.

The main beam may comprise a square steel box section, a steel 'I' section or RSJ, or a fabricated section. Where the main beam comprises an 'I' section or RSJ, the holes may be provided in a flange of the 'I' section or RSJ.

The adjustable beams may each comprise a square steel box section, a steel 'I' section or RSJ, or a fabricated steel section.

The adjustable beams may each comprise a buffer on a front surface thereof to prevent damage to a pipe section during use. The buffer may comprise, for example, a length of wood or a rubber material.

Practicable embodiments of the invention are described in further detail below with reference to the accompanying drawings, of which:
Figure 1 is a perspective view of a typical section of concrete pipe;
Figure 2 is a schematic view of one commonly used method of jointing pipe sections;
Figure 3 is a schematic plan view of a pipe pushing tool in accordance with the present invention;
Figure 4 is a schematic side view of the tool from Figure 3;
Figure 5 shows detail of components from the tool of Figures 3 and 4;
Figure 6 is a schematic plan view of a pipe pushing tool in accordance with a second embodiment of the present invention;
Figure 7 is a schematic front view of part of the tool from Figure 6;
Figure 8 is a schematic perspective view of part of the tool from Figure 6; and
Figure 9 is a schematic view illustrating assembly of the parts shown in Figures 7 and 8.

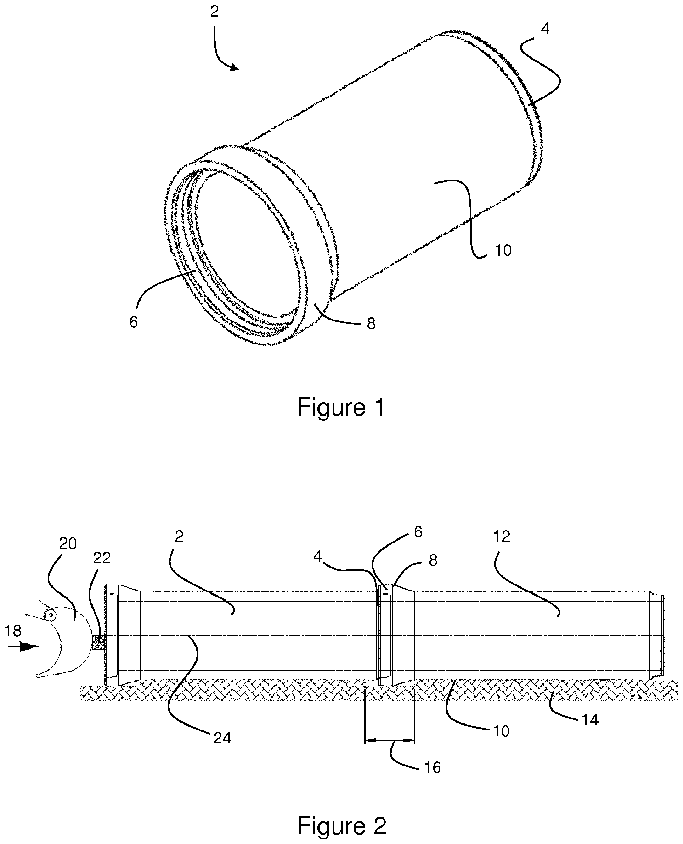

A typical pre-cast concrete pipe section 2 is shown in Figure 1. The section 2 is straight, and comprises a spigot 4 at one end and a socket 6 at the other to allow joints to be formed with similar adjacent pipe sections. The outer diameter of the end 8 of the pipe section surrounding the socket 6 is larger than the diameter of the main body 10 of the pipe section 2 so that the socket 6 can receive a spigot 4 of an adjacent pipe, and a sealing element/gasket, to form a joint.

Figure 2 shows one typical method of jointing pipe sections. For simplicity, only two pipe sections 2,12 are shown, but it will be understood that the same operation would be conducted repeatedly from the end of a growing chain of pipe sections in practice. In the example, both pipe sections 2,12 are essentially identical.

The first and second pipe sections 2,12 are shown in position resting on a bed 14 provided at the bottom of a trench in which the pipe is to be formed. Typically, the pipe sections 2,12 will be lowered into the trench using slings located around their diameters 10. Alternatively, the pipe sections may be provided with mounting points for lifting chains. Each pipe sections 2 is laid behind the existing section(s) 12 in a pre-dug trench, and is then pushed into engagement with the adjacent pipe section 12 to form a joint between the sections 2,12.

In Figure 2, the spigot 4 of the first pipe section 2 is shown received within the socket 6 of the second, previously laid, pipe section 12. The larger outer diameter 8 of the second pipe section 12 is received in a cut out 16 in the bed 14 of the trench. The cut out 16 helps to ensure correct alignment of the adjacent pipe sections 2,12 by ensuring that the main body 10 of each pipe rests flat on the bed 14. This helps to prevent the weight of the first pipe section 2 resting on, and possibly damaging, a gasket positioned between the two pipe sections. The cut out 16 also provides some resistance to movement of the second pipe section 12 along the trench.

To form the joint between the pipe sections 2,12, a force 18 is applied to the end of the first section 2 by an excavator scoop/bucket 20. A length of wood 22 is positioned between the bucket 20 and the first pipe section 2, spanning the central bore of the pipe section 2, to ensure that the bucket 20 does not cause damage to the socket 6 and/or gasket during the pushing operation.

The illustrated method of forming a joint is problematic, primarily because it typically requires one or more workers to hold the length of wood 22 in position across the end of a pipe section 2 while the initial pushing force 18 is applied by the excavator bucket 20. This puts these workers in a dangerous positon, and serious accidents and injuries have occurred due to the length of wood 22 slipping or breaking under the applied force 18. To avoid the limitations of the trench width, the timber is often placed vertically rather than horizontally as shown. This can put an unsustainable load on the timber increasing the risk of breakage and thus further increasing the risk to the workforce.

Other methods of forcing pipe sections 2,12 together for jointing are available, such as using a Tirfor or a bespoke hydraulic cylinder or pipe hook. Where mounting points are provided for chains, adjacent pipe sections can be connected by chains to a common hoist and drawn together by lifting the two sections simultaneously. However, these methods typically require additional large tools and/or are time consuming and/or risk damage to the ends of the pipe sections 2,12 or gaskets. Lifting two adjacent pipe sections 2,12 to draw them together has the additional disadvantage that the alignment between adjacent sections 2,12 will be lost or compromised during the operation. As a result, the method illustrated in Figure 2 remains common despite the obvious safety concerns.

Using the method shown in Figure 2, the applied force 18 can easily be oriented along the central axis 24 of the pipe being formed, at the springing level as recommended. This is often not the case with the alternative methods discussed above. In addition, the excavator used to apply the pushing force 18 will already be on site having been required to dig the trench.

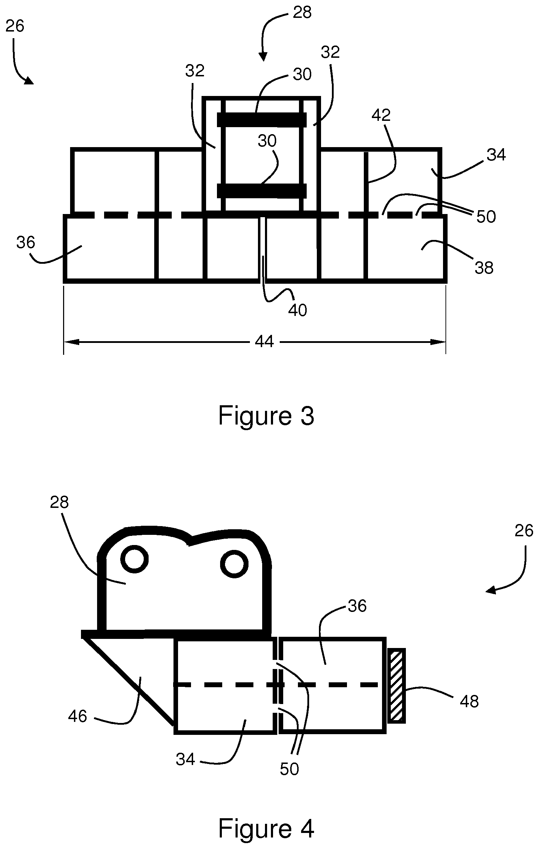

A schematic plan view of a pipe pushing tool 26 according to the present invention is illustrated in Figure 3. The tool 26 comprises a head 28 with a pair of bars 30, each 80mm in diameter and spaced at 460mm centres, between a pair of 25mm thick plates 32 which are 335mm apart. The head 28 provides for attachment to a conventional quick hitch or quick coupler as typically found on excavator arms. Alternative quick hitch heads can be incorporated into the head 28 if required to accommodate alternative excavator quick hitch variants.

A square section steel beam 34, hereafter the main beam, is attached to the underside of the head 28, and first and second adjustable square section steel beams 36,38 are located, with a gap 40 therebetween, in front of the main beam 34. Bolt holes, generally designated 50, are provided to releasably attach the adjustable beams 36,38 to the main beam 34, and reinforcing gussets 42 are provided in both the main beam 34 and the adjustable beams 36,38. The overall width 44 of the tool as shown in Figure 1 is 1270mm, this being suitable for pipe sections up to a diameter of 1200mm.

Figure 4 shows a schematic cross sectional view of the pipe pushing tool 26. One of a pair of 25mm thick webs 46 can be seen between the head 28 and the main beam 34, and a wooden buffer 48 can be seen on the front edge of the first adjustable beam 36. A similar wooden buffer is provided on the front of the second adjustable beam 38, to provide protection between both adjustable beams 36,38 and the end of a pipe section 2.

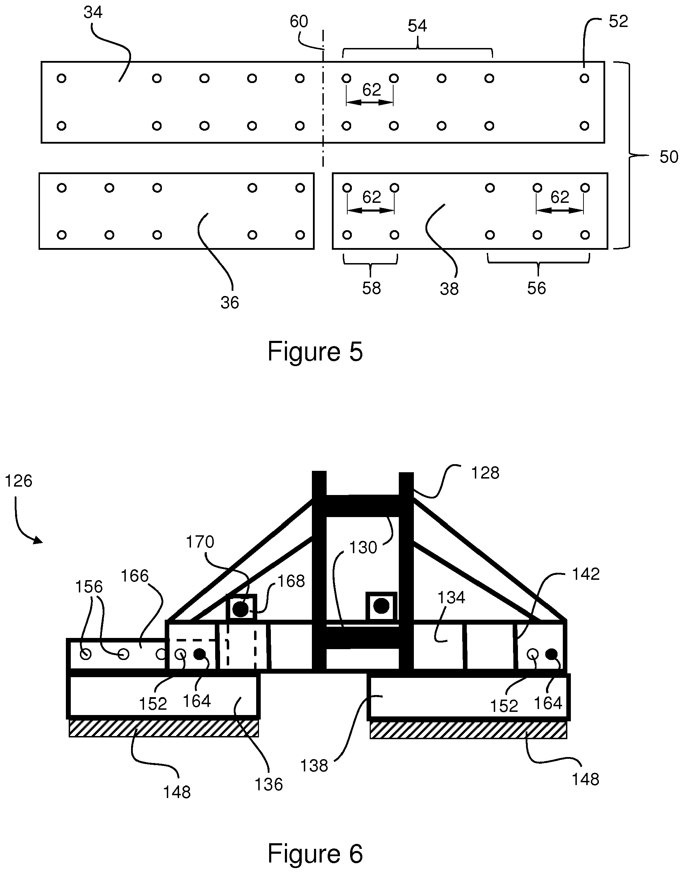

A possible arrangement for the bolt holes 50 in the beams 34,36,38 is shown in Figure 5. Two rows of drilled holes 50 are provided in both the main beam 34 and the adjustable beams 36,38. Either side of a centreline 60, the main beam 34 comprises a single pair of holes 52 at an outer end, and a group 54 of four pairs of holes towards the centreline. Each adjustable beam 36,38 has a first group 56 comprising three pairs of holes towards its outer end, and a second group 58 comprising two pairs of holes toward its inner end, nearest the centreline 60 of the main beam 34. The pairs of holes in each group 54,56,58 have a common spacing 62 of 90mm.

To achieve the configuration shown in Figure 3, the outermost holes in the first group 56 on the adjustable beams 36,38 are aligned with the single pair of holes 52 at each end of the main beam 34, and the four holes in the second group 58 are aligned with the innermost two pairs of holes in the group 54. This is the narrowest configuration of the tool 26, giving a width 1270mm. Bolts are then inserted through the aligned holes to provide six fixing points for each adjustable beam, four towards the centreline 60 and two towards the outer end of the main beam 34.

In order to accommodate larger diameter pipe sections, each adjustable beam 36,38 can be moved outwards in 90mm increments by instead aligning the middle or innermost pair of holes from the first group 56 with the single pair of holes 52 in the main beam 34. The four holes in the second group 58 will then align with a different group of four holes from the group 54 in the main beam 34 so that six fixing points are maintained as the adjustable beams 36,38 are moved outward. The 90mm spacing 62 of the various pairs of holes means that the overall width of the tool 26 can be set at 1270mm, 1450mm or 1630mm as required, while keeping the position of the adjustable beams symmetrical about the centreline 60.

It will be understood that through the use of longer or shorter beams 34,36,38, different maximum and minimum widths of the tool can be provided. Similarly, by altering the spacing of the holes 50 different adjustment intervals may be achieved.

A drawback with the tool 26 shown in Figures 3 to 5 is that the action of adjusting the position of the adjustable beams 36,38 requires the removal and re-insertion of a number of bolts. This could be time consuming, and could discourage workers from using the tool, or from making the appropriate adjustments to suit a particular diameter pipe section 2.

An alternative tool 126 is shown in Figures 6 to 9. Figure 6 is a plan view illustrating features of the alternative tool 126, a number of which are similar to those of the tool 26 of Figures 3 to 5. Bars 130 are provided on a head 128 to connect the tool 126 to a standard quick hitch coupling, for example on the end of an excavator arm. First and second adjustable steel beam 136,138, each with a wooden buffer 148, are again provided in front of a main steel beam 134 making up the body of the tool 126. Reinforcing gussets 142 are again provided in the main beam 134 for strength.

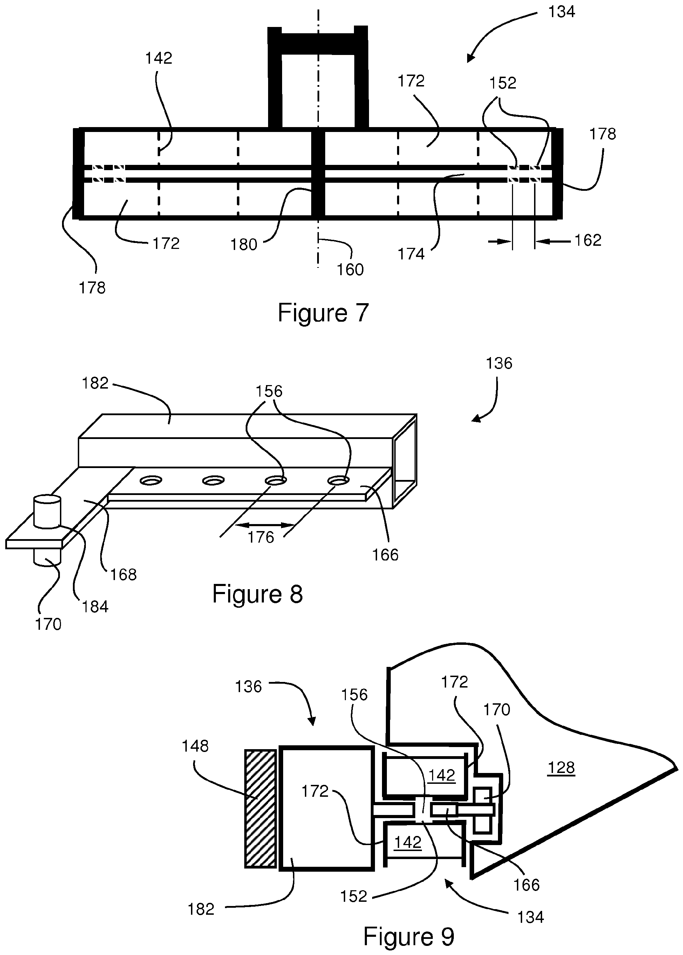

The main difference between the tool 126 of Figures 6 to 8 and the previously described tool 26 of Figures 3 to 5 is in the adjustment mechanism. Instead of relying on a bolted connection between the main beam 134 and the adjustable beams 136,138, the tool 126 of Figure 6 relies on the engagement of a 20mm locating pin 164 with one of a pair of holes 152 provided at each end of the main beam 134 and one of a group of holes 156 provided in a first plate 166 which is fixed to the rear of each adjustable beam 136,138. The first plate 166 is received in a horizontal slot provided through the main beam 134 (see Figure 7) and is free to slide within this slot when not restrained by the locating pin 164.

In Figure 6, the first adjustable beam 136 is shown in an extended position, with the locating pin 164 passing through the innermost of the group of holes 156 in the first plate 166 and the innermost of the pair of holes 152 at one end of the main beam 134. It should be understood that further extension could be achieved by instead using the outermost of the pair of holes 152 at one end of the main beam 134. A second plate 168 is shown extending from the first adjustable beam 136 through the horizontal slot in the main beam 134, and a larger 50mm load bearing pin 170 is fixed through the second plate 168 to prevent rotation of the first adjustable beam 136 relative to the main beam. The parts of the plates 166,168 on the first adjustable beam 136 that are obscured by the main beam 134 are shown in broken lines.

The second adjustable beam 138 is provided with a similar set of plates, although the obscured parts are not shown in Figure 6. The second adjustable beam 138 is shown in its innermost position, with a locating pin 164 passing through the outermost of the group of holes 156 in the first plate 166 and the outermost of the pair of holes 152 at the end of the main beam 134.

Figure 7 shows a front view of the tool 126 with the adjustable beams 136,138 removed to show the construction of the main beam 134. A pair of steel 'U' section channels 172 are spaced apart to leave a horizontal slot 174 in between, and are held in position by a pair of end plates 178 and a central bar 180 at the centreline 160 of the main beam. The strengthening gussets 142 are shown in broken lines, and the locations of the pairs of holes 152 through each end of each channel 172 are also indicated.

Figure 8 shows the first adjustable beam 136 in isolation. The adjustable beam comprises a square steel box section 182 to which the plates 166,168 are welded. Reinforcing gussets similar to those included in the main beam may also be included within the box section 184 if required. A group of four holes 156 are shown in the first plate 166, and a load bearing pin 170 is shown secured in position through the second plate 168.

In order to assemble the adjustable beam 136 to the main beam, the load bearing pin 170 is removed from the second plate 168 and the first and second plates 166,168 are received in the horizontal slot 174 with the second plate 168 nearest the centreline 160. The length of the second plate 168 is such that it extends completely through the depth of the slot 174 such that the hole 184 for receiving the load bearing pin 170 is accessible just beyond a rear side of the main beam 134. The load bearing pin 170 can thus be re-inserted into its hole 184 and secured in place to retain the adjustable beam 136 and the main beam 134 together. In contrast, the first plate 166 extends only part way through the slot 174, so is completely received in a front part of the main beam 134.

Once assembled, the box section 182 sits generally parallel to, and in abutment with, a front side of the 'U' section channels 172, with the group of holes 156 in the first plate 166 aligned with the pair of holes 152 in the end of the main beam 134. In this position, the adjustable beam 136 can slide laterally along the horizontal slot 174. The central bar 180 prevents the adjustable beams 136,138 passing the centreline 160 of the main beam 134 by engaging with the second plate 168 and/or the square box section 182. The end plates 178 extend only across a rear part of the main beam 134 so that the first plate 166 of the adjustable beam 136 can bypass the end plate 178 to extend outwardly past the ends of the main beam 134. The end plates 178 will, however, engage with the longer second plate 168 to prevent separation of the adjustable beams 136,138 from the main beam without removal of the load bearing pins 170.

Only a single locating pin 164 is required to hold each adjustable beam in position during use. However, the provision of pairs of holes 152 in each end of the main beam 134 allows for an increased number of positions for each adjustable beam 136,138, because the spacing 162 of the pair of holes 152 in each end of the main beam 134 differs from the spacing 176 between the holes in the group 156 of holes in the first plate 166. In the illustrated example, the spacings 162,176 are 50mm and 100mm respectively. This allows the adjustable beam 136 to be located at eight defined positions, at 50mm intervals, relative to the main beam 134.

Once again, the length of beams 134,136,138 can be selected to achieve a desired maximum and minimum width of the tool 126, and altering the spacing of the holes 152,156 can provide different adjustment intervals.

Figure 9 helps to illustrate the interaction between the main beam 134 and the adjustable beam 136. The cross sections of the two channels 172 making up the main beam 134 are clearly shown, and a strengthening gusset 142 is shown spanning each channel 172. One of the group of holes 156 in the first plate 166 is aligned with one of the pair of holes 152 in each channel 172 ready to receive a locating pin 156, and the load bearing pin 170 is in place at the rear side of the main beam 134. The load bearing pin 170 prevents movement of the adjustable beam 136 away from the main beam 134 (to the left as shown), while the location of the first plate 166 between the two channels 172 prevents vertical movement or twisting.

The illustrated embodiments described above are provided by way of example only. A skilled reader would understand that various changes could be made without departing from the general inventive concept of the invention.

For example, the beams in the example tools 26,126 are described as being square steel box section, but it is quite possible that 'I' section/RSJ beams or fabricated sections could be used. In particular, RSJs could be used for both the main beam 34 and the adjustable beams 36,38 in the first described embodiment, with the bolt holes preferably being provided in the flanges in each case. RSJs could also be used for the adjustable beams 136,138 in the second embodiment, with the plates 166,168 being welded to the centre of one of the flanges in line with the web.

Alternatively, or additionally, the buffers 48,148 may not be formed from wood, but may comprise an alternative material such as a rubber or plastics material suitable to provide a contact surface less damaging than steel to the concrete pipe sections.

The invention described above helps to provide safer operation when jointing pipes, while making use of machinery, specifically an excavator which will already be present on site.

Using the tool of the invention the jointing operation can be made faster and more efficient, and greater control can be provided over line and level when jointing. If desired, a laser target can be placed in pipe so the excavator driver can adjust for line and level remotely. The tool can also be used to push the pipe in to the bedding to maintain level.

Significantly, the need for workers to be present in or around the trench whilst jointing takes place is avoided. This both reduces required manpower and improves the safety of the workforce on site.

## Claims

1. A pipe pushing tool comprising:
a main body having a head with a quick hitch coupling for securing the tool to the arm of an excavator or similar machine and an elongate main beam secured at right angles to the head across the width of the tool,
a pair of adjustable beams provided along a first side of the main beam to define a front face of the tool, and
releasable securing means for securing each adjustable beam to the main beam,
wherein each adjustable beam is movable along the length of the main beam and wherein the securing means permit each adjustable beam to be secured to the main beam in more than one position to thereby adjust the width of the tool.

2. A pipe pushing tool according to claim 1, wherein the securing means comprises a plurality of holes in the main beam.

3. A pipe pushing tool according to claim 2, wherein the securing means comprises a plurality of holes in each of the adjustable beams.

4. A pipe pushing tool according to claim 3, wherein the main beam comprises a horizontal slot and each of the adjustable beams comprises a first plate which is, in use, received in the horizontal slot.

5. A pipe pushing tool according to claim 4, wherein the securing means comprises a locating pin removably inserted through one of the plurality of holes in the main beam and one of the plurality of holes in each of the adjustable beams.

6. A pipe pushing tool according to claim 5, wherein the plurality of holes in the main beam extend across the horizontal slot and the plurality of holes in the adjustable beams are provided in the plates.

7. A pipe pushing tool according to claim 5 or 6, wherein two holes are provided in each end of the main beam.

8. A pipe pushing tool according to claim 7, wherein the spacing between the two holes in each end of the main beam differs from the spacing between adjacent holes in the plurality of holes in the adjustable beams.

9. A pipe pushing tool according to any of claims 4 to 8, wherein the securing means comprise a second plate provided on each adjustable beam which extends, in use, through the horizontal slot so that an end portion of the second plate extends beyond a second side of the main beam opposite the first side, and an abutment feature extending from the end portion of the second plate perpendicular to the horizontal slot.

10. A pipe pushing tool according to claim 9, wherein the abutment feature comprises a pin removably received in a hole provided in the end portion of the second plate.

11. A pipe pushing tool according to any of claims 4 to 10, wherein the main beam comprises two members, for example two U shaped steel channels positioned back to back, secured together in a spaced relationship to provide the horizontal slot.

12. A pipe pushing tool according to claim 3, wherein the securing means comprises a set of bolts which are, in use, received in selected holes in the main beam and in the adjustable beams.

13. A pipe pushing tool according to claim 12, wherein two rows of holes are provided in the main beam and in the adjustable beams.

14. A pipe pushing tool according to claim 12 or 13, wherein the plurality of holes in the main beam and the plurality of holes in the adjustable beams are provided in spaced apart groups.

15. A pipe pushing tool according to any of the preceding claims, wherein the adjustable beams each comprise a buffer on a front surface thereof.
